# EUROPÄISCHE PATENTSCHRIFT

(11) **EP 2 844 467 B1**
(45) Veröffentlichungstag und Bekanntmachung des Hinweises auf die Patenterteilung: **20.07.2016**
(21) Anmeldenummer: 13714972.0
(22) Anmeldetag: 11.04.2013
(51) Int. Cl.: B32B 15/08, B32B 3/18

(54) **ANWENDUNGSSPEZIFISCH SCHWEISSBARES VERBUNDBLECH**
APPLICATION-SPECIFIC WELDABLE COMPOSITE METAL SHEET
TÔLE COMPOSITE SOUDABLE POUR APPLICATIONS SPÉCIFIQUES

(30) Priorität: 30.04.2012 DE 102012103793
(43) Veröffentlichungstag der Anmeldung: 11.03.2015
(73) Patentinhaber: ThyssenKrupp Steel Europe AG, 47166 Duisburg (DE)
(72) Erfinder: PATBERG, Lothar, 47445 Moers (DE); HEMPOWITZ, Heinz, 47661 Issum (DE); MAYER, Stefan, 58239 Schwerte (DE)
(74) Vertreter: Cohausz & Florack
(86) Internationale Anmeldenummer: PCT/EP2013/057569
(87) Internationale Veröffentlichungsnummer: WO 2013/164173

(56) Entgegenhaltungen:
- US-A- 5 084 357
- US-A- 5 942 077
- DATABASE WPI Week 198609 Thomson Scientific, London, GB; AN 1986-058920 XP002699874, -& JP S61 10445 A (TOYOTA JIDOSHA KK) 17. Januar 1986 (1986-01-17)

## Beschreibung

Die vorliegende Erfindung betrifft ein Verbundblech umfassend mindestens eine Metallschicht und mindestens eine Kunststoffschicht, wobei die Kunststoffschicht mit der Metallschicht zumindest teilweise flächig verbunden ist und die Kunststoffschicht mindestens zwei unterschiedliche Bereiche aufweist. Ferner betrifft die Erfindung ein Verfahren zur Herstellung eines Verbundblechs und die Verwendung des Verbundblechs zum prozesssicheren Fügen mit einem weiteren Bauteil im Kraftfahrzeugbau.

Verbundwerkstoffe der zuvor genannten Art besitzen die vorteilhaften Eigenschaften eines geringen Gewichts und stellen gleichzeitig eine hohe Festigkeit und Steifigkeit bereit. Damit eignen sie sich insbesondere für den Fahrzeugbau als Leichtbauwerkstoffe. Mit der Entwicklung von höher- und höchstfesten Werkstoffen, insbesondere bei den Stahlwerkstoffen, kann die Dicke der metallischen Schichten bei gleichbleibender Verbundwerkstoffdicke herabgesetzt werden und durch Zunahme des Kunststoffanteils kann das Gewicht des Verbundwerkstoffs bei im Wesentlichen gleichbleibenden mechanischen Kennwerten weiter gesenkt werden.

Die US 2006/0062977 A1 offenbart einen Verbundwerkstoff bestehend aus zwei metallischen Deckschichten und einer zwischen den Deckschichten angeordneten Kunststoffschicht, die mit elektrisch leitenden Mitteln in Form von Partikeln oder Drähten dispergiert ist. Da sich mit der Zunahme des Kunststoffanteils ebenfalls der Anteil der dispergierten elektrisch leitenden Mittel erhöht und damit verbunden das Gewicht des Verbundwerkstoffs entweder gleichbleibt oder ansteigt, ist der in dieser Druckschrift beschriebene Verbundwerkstoff eher ungeeignet für den Leichtbau.

Die DE 10 2006 043 980 A1 offenbart einen Verbundwerkstoff mit zwei metallischen Deckschichten und einer zwischen den Deckschichten angeordneten, elektrisch isolierenden Kunststoffschicht, die an zu schweißenden Stellen Ausnehmungen in der Kunststoffschicht vorsieht. Dabei kann jedoch nicht sichergestellt werden, dass die Ausnehmungen des im fließfähigen Zustand aufgetragenen Kunststoffs frei von Kunststoff bleiben, so dass das Schweißen dieses Verbundwerkstoffs nicht prozesssicher ist.

In der JP S61-10445 A wird ein Verbundblech mit einer Kunststoffschicht und zwei Blechen offenbart. Die Kunststoffschicht besteht aus elektrisch leitfähigen und isolierenden Abschnitten.

Ausgehend von diesem Stand der Technik liegt der vorliegenden Erfindung die Aufgabe zugrunde, ein Verbundblech anzugeben, das ein prozesssicheres Fügen ermöglicht, das einfach hergestellt werden kann und das zudem im Leichtbau eingesetzt werden kann.

Gemäß einer ersten Lehre der Erfindung wird die Aufgabe dadurch gelöst, dass mindestens ein erster Bereich der Kunststoffschicht elektrisch leitfähig ist und mindestens ein zweiter Bereich der Kunststoffschicht elektrisch isolierend ist, mindestens eine weitere Metallschicht vorgesehen ist, die zumindest teilweise flächig mit der Kunststoffschicht verbunden ist, die Kunststoffschicht zwischen den Metallschichten angeordnet ist und die mindestens zwei Metallschichten aus verschiedenen Metallen und/oder Metalllegierungen bestehen.

Es wurde erkannt, dass ein prozesssicheres Fügen des Verbundblechs mit einem weiteren Bauteil in der Regel nur in anwendungsspezifischen Bereichen erfolgt und dass daher nur in diesen Bereichen eine schweißbare Kunststoffschicht vorzusehen ist. Die anderen Bereiche des Verbundbleches können daher eine elektrisch nicht leitende Kunststoffschicht aufweisen. Insofern wirken nur die in den elektrisch leitfähigen Bereichen vorgesehene Kunststoff aufgrund metallischer bzw. anderer leitfähiger Anteile zur Erzielung der elektrischen Leitfähigkeit Gewicht erhöhend. Durch das gezielte Einsetzen der elektrisch leitfähigen Bereiche des Verbundblechs nur in den Bereichen, wo beispielsweise geschweißt wird, ermöglicht deshalb das Gewicht des Verbundblechs auch bei höheren Dicken der Kunststoffschicht zu optimieren. Gleichzeitig kann die Anbindung an ein weiteres Bauteil auf einfache Weise durch Widerstandsschweißen erfolgen. Die Anbindung erfolgt nur in den dafür vorgesehenen Bereichen mit elektrisch leitfähiger Kunststoffschicht. Dieses Schweißverfahren kann einfach und kostengünstig umgesetzt werden und ist deshalb insbesondere im Fahrzeugbau ein dominierendes Fügeverfahren.

In einer ersten Ausführungsform werden in dem mindestens einen elektrisch leitfähigen Bereich der Kunststoffschicht elektrisch leitende Mittel, insbesondere in Form von Partikeln, Drähten oder Drahtgeflechten, dispergiert. Durch die Dispersion mit elektrisch leitenden Mitteln kann die elektrische Leitfähigkeit dieses Bereiches der Kunststoffschicht gewährleistet werden.

Vorzugsweise ist die Dichte des mindestens einen elektrisch leitfähigen Bereiches der Kunststoffschicht größer als die Dichte des mindestens einen elektrisch isolierenden Bereiches der Kunststoffschicht. Die Dichte des mindestens einen elektrisch leitfähigen Bereiches der Kunststoffschicht liegt beispielsweise zwischen 2 und 3 g/cm³, während die Dichte des mindestens einen elektrisch isolierenden Bereiches beispielsweise ungefähr 1 g/cm³ beträgt.

Es ist mindestens eine weitere Metallschicht vorgesehen, die zumindest teilweise flächig mit der Kunststoffschicht verbunden ist, wobei die Kunststoffschicht zwischen den Metallschichten angeordnet ist. Ein sogenanntes Sandwichblech besitzt deutlich gesteigerte Festigkeitswerte, kann aber dennoch mit guten Umformeigenschaften ausgestattet werden. Zudem zeichnet es sich zusätzlich durch hohe schwingungsdämpfende Eigenschaften aus.

Die mindestens eine Metallschicht kann aus Stahl, insbesondere Kohlenstoffstahl oder Edelstahl, oder Aluminium und/oder einer Aluminiumlegierung, insbesondere der Legierungsgruppe A15xxx oder A16xxx oder Magnesium und/oder einer Magnesiumlegierung bestehen. Auch alle weiteren schweißbaren Metalle können im erfindungsgemäßen Verbundblech verwendet werden. Die Verwendung von Aluminium und/oder einer Aluminiumlegierung hat aufgrund seiner geringeren Dichte beispielsweise gegenüber Stahl den Vorteil, dass das Gewicht des erfindungsgemäßen Verbundblechs weiter reduziert werden kann.

Des Weiteren bestehen die mindestens zwei Metallschichten aus verschiedenen Metallen und/oder Metalllegierungen. Beispielhaft sei hier eine Verbindung bestehend aus einer Stahlschicht, einer Kunststoffschicht und einer Aluminiumschicht genannt. Durch eine Sandwichverbindung, die verschiedene Metalle und/oder Metalllegierungen aufweist, können die unterschiedlichen Eigenschaften der Metalle optimal ausgenutzt werden.

Die Dicke der mindestens einen Metallschicht liegt zwischen 0,1 und 2 mm, vorzugsweise 0,1 mm und 1,0 mm, besonders bevorzugt 0,1 mm und 0,5 mm. Die mindestens zwei Metallschichten einer Sandwichverbindung können aber auch unterschiedliche Dicken aufweisen.

Die Dicke der mindestens einen Kunststoffschicht ist größer als die Dicke der mindestens einen Metallschicht. Somit kann das Gewicht des Verbundblechs weiter reduziert werden.

In einer besonders bevorzugten Ausführungsform ist die mindestens eine Metallschicht als Halbzeug, insbesondere als Blech, Band, "tailored blank" oder "tailored strip" ausgebildet. Die mindestens eine Metallschicht kann demnach auch in verschiedenen Abschnitten eine unterschiedlich Dicke aufweisen. So können anwendungsspezifische lokale Belastungen bereits bei der Fertigung des Verbundblechs berücksichtigt werden.

Gemäß einer zweiten Lehre der Erfindung wird die oben genannte Aufgabe durch ein Verfahren zur Herstellung eines Verbundblechs gemäß einer der zuvor beschriebenen Ausführungsformen dadurch gelöst, dass die mindestens eine Metallschicht und die mindestens eine Kunststoffschicht bandförmig ausgebildet sind und die Herstellung durch bandförmiges Laminieren erfolgt. Somit kann der Herstellung eines Verbundblechs einer der zuvor beschriebenen Ausführungsformen dahingehend optimiert werden, dass der Herstellungsprozess kontinuierlich ablaufen kann. Es ist somit nicht notwendig einzelne Bleche zu fertigen. Nach der Produktion des Verbundblechs aus den bandförmigen Materialien können einzelne Bleche anwendungsspezifisch einfach abgelängt werden.

In bevorzugter Weise wird der mindestens eine elektrisch leitfähige Bereich von einem bandförmigen Material bereitgestellt und der mindestens eine elektrisch isolierende Bereich der mindestens einen Kunststoffschicht von einem weiteren bandförmigen Material bereitgestellt. Die Herstellung eines Kunststoffbereiches, der mindestens einen elektrisch leitfähigen Bereich und mindestens einen elektrisch isolierenden Bereich aufweist, wird dadurch besonders einfach, da die einzelnen bandförmig ausgebildeten Kunststoffe anwendungsspezifisch angeordnet werden können. Denkbar ist auch, dass ein bandförmiges Material einer Kunststoffschicht bereitgestellt wird, welches bereits Bereiche, die elektrisch isolierend und Bereiche die elektrisch leitend sind, aufweist.

Besonders bevorzugt wird der mindestens eine elektrisch leitfähige Bereich der Kunststoffschicht von einem ersten bandförmigen Material bereitgestellt und der mindestens eine elektrisch isolierende Bereich von einem weiteren bandförmigen Material bereitgestellt, so dass die unterschiedlichen Kunststoffe getrennt voneinander einem Laminierprozess zugeführt werden können und beim Laminieren gleichzeitig mit der mindestens einen Metallschicht durch Laminieren verbunden werden. Das bandförmige Material kann damit optimal für den Herstellungsprozess bereitgestellt, aber auch gelagert werden.

Vorzugsweise wird ein erfindungsgemäßes Verbundblech zum prozesssicheren Fügen mit einem weiteren Bauteil im Kraftfahrzeugbau verwendet. Dadurch kann eine deutliche Gewichtsreduktion beispielsweise von Karosserieteilen bewirkt werden.

Im Folgenden soll die Erfindung anhand von Ausführungsbeispielen näher erläutert werden, wobei auf die beiliegende Zeichnung Bezug genommen wird.

In der Zeichnung zeigen
- Fig. 1: in perspektivischer Ansicht ein erstes Ausführungsbeispiel eines erfindungsgemäßen Verbundblechs,
- Fig. 2: in perspektivischer Ansicht ein weiteres Ausführungsbeispiel eines erfindungsgemäßen Verbundblechs,
- Fig. 3: in schematischer Schnittansicht ein weiteres Ausführungsbeispiel eines erfindungsgemäßen Verbundblechs,
- Fig. 4: in perspektivischer Ansicht ein Anwendungsbeispiel eines erfindungsgemäßen Verbundblechs und
- Fig. 5a, b: in schematischer Ansicht ein Ausführungsbeispiel des erfindungsgemäßen Verfahrens.

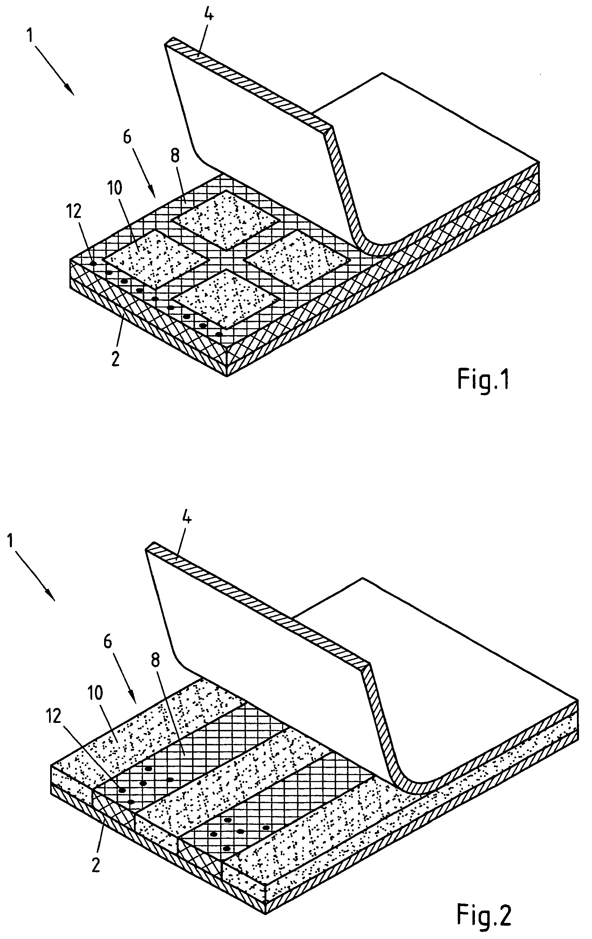

Fig. 1 zeigt in perspektivischer Ansicht ein erstes Ausführungsbeispiel des erfindungsgemäßen Verbundblechs 1. Das dargestellte Verbundblech 1 umfasst zwei Metallschichten 2 und 4 und mindestens eine Kunststoffschicht 6, die zwischen den Metallschichten 2 und 4 angeordnet ist und die zumindest teilweise flächig mit den Metallschichten 2 und 4 verbunden ist. Die Kunststoffschicht 6 ist in mindestens zwei unterschiedliche Bereiche aufgeteilt, wobei mindestens ein erster Bereich 8 der Kunststoffschicht 6 elektrische leitfähig ist und mindestens ein zweiter Bereich 10 der Kunststoffschicht 6 elektrisch isolierend ist. In dem elektrisch leitfähigen Bereich 8 der Kunststoffschicht 6 sind elektrisch leitende Mittel 12 dispergiert, die die Leitfähigkeit in diesem Bereich gewährleisten. Im gezeigten Ausführungsbeispiel sind die elektrisch isolierenden Bereiche 10 der Kunststoffschicht viereckige, inselartige Bereiche, die in dem elektrisch leitfähigen Bereich 8 eingebettet sind. Die elektrisch isolierenden Bereiche 10 können anwendungsspezifisch zugeschnitten und anschließend beispielsweise in den elektrisch leitfähigen Bereich 8 eingestreut werden. Demnach ist auch jede andere Kontur der elektrisch isolierenden Bereiche 10 denkbar. Die Metallschichten 2 und 4 können aus Stahl, insbesondere aus Kohlenstoffstahl oder Edelstahl, aus Aluminium und/oder einer Aluminiumlegierung, insbesondere der Legierungsgruppe A1 5xxx oder A16xxx, oder Magnesium und/oder einer Magnesiumlegierung bestehen. In bevorzugter Weise können die Metallschichten 2 und 4 aus verschiedenen Metallen und oder Metalllegierungen bestehen. Die Dicke der Metallschichten 2 und 4 beträgt vorzugsweise jeweils 0,1 bis 1 mm. Die Dicke der Kunststoffschicht 6 ist im gezeigten Ausführungsbeispiel größer als die Dicke der metallischen Deckschichten 2, 4.

Fig. 2 zeigt in perspektivischer Ansicht ein zweites Ausführungsbeispiel eines erfindungsgemäßen Verbundblechs 1. Das dargestellte Ausführungsbeispiel umfasst zwei Metallschichten 2 und 4 und eine Kunststoffschicht 6, die zwischen den beiden Metallschichten 2 und 4 angeordnet ist. Die Kunststoffschicht 6 ist zumindest teilweise flächig mit den Metallschichten 2 und 4 verbunden. Die Kunststoffschicht 6 ist in mindestens zwei unterschiedliche Bereiche aufgeteilt, wobei mindestens ein erster Bereich 8 der Kunststoffschicht 6 elektrische leitfähig ist und mindestens ein zweiter Bereich 10 der Kunststoffschicht 6 elektrisch isolierend ist. In dem elektrisch leitfähigen Bereich 8 der Kunststoffschicht 6 sind elektrisch leitende Mittel 12 dispergiert, die die Leitfähigkeit in diesem Bereich gewährleisten. Im gezeigten Ausführungsbeispiel sind die elektrisch isolierenden Bereiche 10 der Kunststoffschicht 6 streifenförmig und abwechselnd mit den elektrisch leitfähigen Bereichen 8 angeordnet. Die Metallschichten 2 und 4 können aus Stahl, insbesondere aus Kohlenstoffstahl oder Edelstahl, aus Aluminium und/oder einer Aluminiumlegierung, insbesondere der Legierungsgruppe A1 5xxx oder A16xxx, oder Magnesium und/oder einer Magnesiumlegierung bestehen. Die Metallschichten 2 und 4 bestehen aus verschiedenen Metallen und oder Metalllegierungen. Die Dicke der der Metallschichten 2 und 4 beträgt vorzugsweise 0,1 bis 1 mm. Die Dicke der Kunststoffschicht 6 ist im gezeigten Ausführungsbeispiel größer als die Dicke der metallischen Deckschichten 2 und 4.

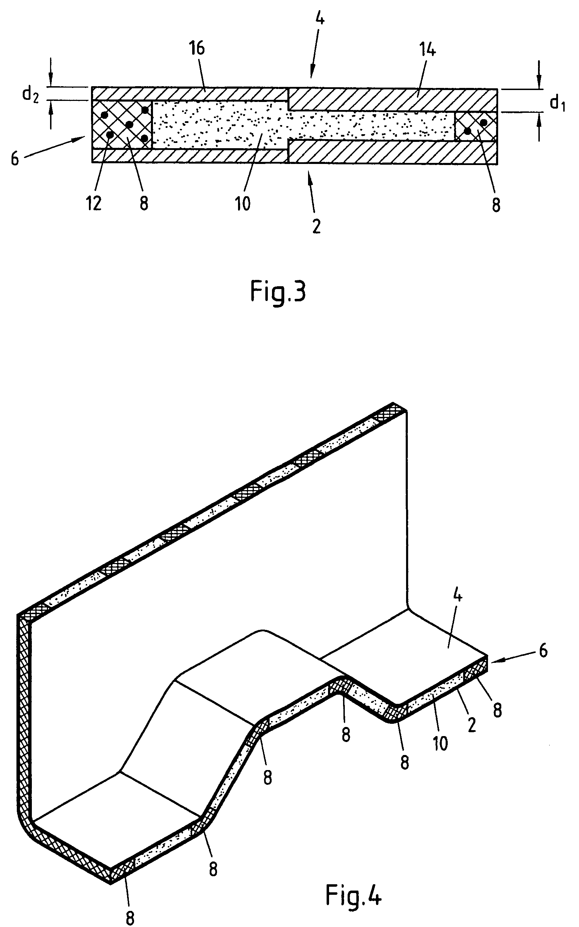

Fig. 3 zeigt in schematischer Schnittansicht ein weiteres Ausführungsbeispiel eines erfindungsgemäßen Verbundblechs. Das dargestellte Verbundblech umfasst genau wie die ersten beiden Ausführungsbeispiele zwei Metallschichten 2 und 4 und eine Kunststoffschicht 6, wobei die Kunststoffschicht mit den Metallschichten 2 und 4 zumindest teilweise flächig verbunden ist und wobei die Kunststoffschicht 6 mindestens zwei unterschiedliche Bereiche aufweist. Dabei ist ein Bereich 8 der Kunststoffschicht 6 elektrisch leitfähig und ein zweiter Bereich 10 elektrisch isolierend. In dem elektrisch leitfähigen Bereich 8 der Kunststoffschicht 6 sind elektrisch leitende Mittel 12 dispergiert, die die Leitfähigkeit in diesem Bereich gewährleisten. Die Metallschichten 2 und 4 bestehen aus Stahl, insbesondere aus Kohlenstoffstahl oder Edelstahl, aus Aluminium und/oder einer Aluminiumlegierung, insbesondere der Legierungsgruppe A15xxx oder A16xxx, oder aus Magnesium und/oder einer Magnesiumlegierung. Die Metallschichten 2 und 4 sind im dargestellten Ausführungsbeispiel als tailored blank oder tailored strip ausgebildet. Demnach weisen sie in einem ersten Bereich 14 eine Dicke d1 und in einem zweiten Bereich 16 eine Dicke d2 auf. Im dargestellten Ausführungsbeispiel ist die Dicke d1 größer als die Dicke d2. Ebenso kann aber auch die Dicke d2 größer als die Dicke d1 sein.

In Fig. 4 ist ein beispielhaft für die Verwendung eines erfindungsgemäßen Verbundblechs eine Trennwand zwischen Motorraum und Fahrgastzelle eine Kraftfahrzeugs dargestellt. Die Trennwand umfasst zwei Metallschichten 2 und 4 und eine Kunststoffschicht 6, die zwischen den Metallschichten 2 und 4 angeordnet ist. Die Kunststoffschicht weist elektrisch leitfähige Bereiche 8 und elektrisch isolierende Bereiche 10 auf.

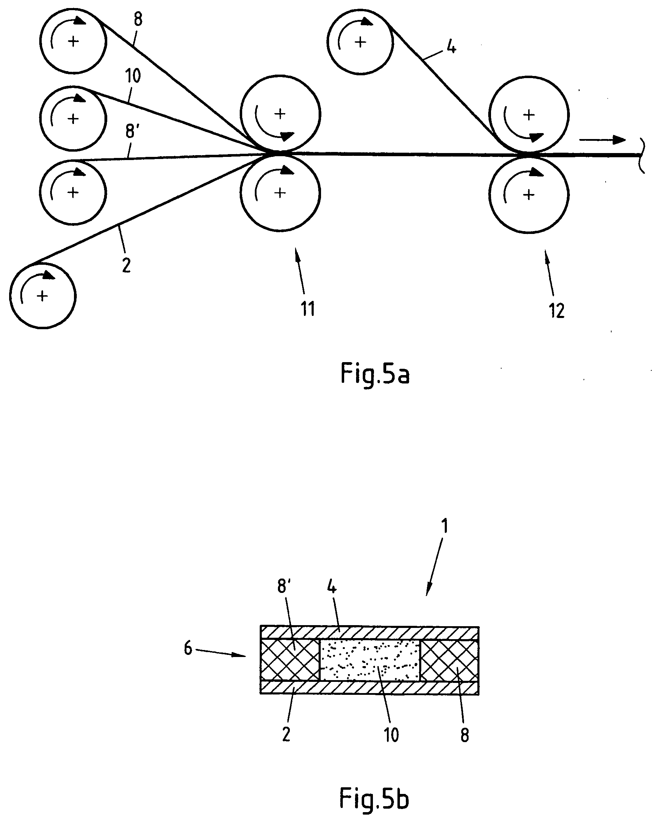

Die Fig. 5a zeigt ein Verfahren zur Herstellung eines Verbundblechs 1 aus einem bandförmigen Vormaterial. Sowohl die Metallschichten 2 und 4 als auch die Kunststoffbereiche 8, 8' und 10 sind bandförmig ausgebildet und können, wie in Fig. 5a dargestellt, während des Herstellungsprozesses von einem Coil abgewickelt werden. Dabei werden in einem ersten Laminierschritt beispielsweise drei Kunststoffschichten 8,8' und 10 auf eine erste Metallschicht 2 unter Verwendung einer nur schematisch dargestellten Laminiervorrichtung laminiert. Anschließend wird das so hergestellte bandförmige Verbundblech mit einer weiteren Metallschicht 4 in einer weiteren Laminiervorrichtung 12, beispielsweise in einer Doppelbandpresse, zu einem Sandwichblech laminiert. Das so hergestellte bandförmige Sandwichverbundblech kann dann wiederum zu einem Coil gewickelt werden. Denkbar ist auch, dass nach dem Laminieren das hergestellte Verbundblech unmittelbar zugeschnitten bzw. auf die gewünschten Blechlängen abgelängt wird.

Fig. 5b zeigt das nach dem Laminierungsprozess erhaltene Verbundblech. Dieses umfasst zwei Metallschichten 2 und 4 und eine dazwischen angeordneten Kunststoffschicht 6, die elektrisch leitfähige Bereiche 8, 8' und elektrisch nicht leitfähige Bereiche 10 aufweist. Die elektrisch leitfähigen Bereiche 8, 8' lassen sich auf einfache Weise für die Verbindung des Verbundblechs mit weiteren metallischen Bauteilen durch Widerstandsschweißen nutzen.

## Patentansprüche

1. Verbundblech (1) umfassend mindestens eine Metallschicht (2, 4) und mindestens eine Kunststoffschicht (6),
wobei die Kunststoffschicht (6) mit der mindestens einen Metallschicht (2, 4) zumindest teilweise flächig verbunden ist und die Kunststoffschicht (6) mindestens zwei unterschiedliche Bereiche aufweist,
- mindestens ein erster Bereich (8) der Kunststoffschicht (6) elektrisch leitfähig ist und
- mindestens ein zweiter Bereich (10) der Kunststoffschicht (6) elektrisch isolierend ist
**dadurch gekennzeichnet, dass**
die Dicke der mindestens einen Kunststoffschicht (6) größer als die Dicke der mindestens einen Metallschicht (2, 4) ist, mindestens eine weitere Metallschicht (4) vorgesehen ist, die zumindest teilweise flächig mit der Kunststoffschicht (6) verbunden ist, die Kunststoffschicht (6) zwischen den Metallschichten (2, 4) angeordnet ist und die mindestens zwei Metallschichten (2, 4) aus verschiedenen Metallen und/oder Metalllegierungen bestehen.

2. Verbundblech nach Anspruch 1,
**dadurch gekennzeichnet, dass**
in dem mindestens einen elektrisch leitfähigen Bereich (8) der Kunststoffschicht (6) elektrisch leitende Mittel (12), insbesondere in Form von Partikeln, Drähten oder Drahtgeflechten, dispergiert werden.

3. Verbundblech nach Anspruch 1 oder 2,
**dadurch gekennzeichnet, dass**
die Dichte des mindestens einen elektrisch leitfähigen Bereiches (8) der Kunststoffschicht (6) größer als die Dichte des mindestens einen elektrisch isolierenden Bereiches (10) der Kunststoffschicht (6) ist.

4. Verbundblech nach einem der Ansprüche 1 bis 3,
**dadurch gekennzeichnet, dass**
die mindestens eine Metallschicht (2, 4) aus Stahl, insbesondere Kohlenstoffstahl oder Edelstahl, Aluminium und/oder einer Aluminiumlegierung, insbesondere der Legierungsgruppe AA5xxx oder AA6xxx, oder Magnesium und/oder einer Magnesiumlegierung besteht.

5. Verbundblech nach einem der Ansprüche 1 bis 4,
**dadurch gekennzeichnet, dass**
die mindestens eine Metallschicht (2, 4) eine Dicke von 0,1 bis 2 mm aufweist.

6. Verbundblech nach einem der Ansprüche 1 bis 5,
**dadurch gekennzeichnet, dass**
die mindestens eine Metallschicht (2, 4) als Halbzeug, insbesondere als Blech, Band, tailored blank oder tailored strip, ausgebildet ist.

7. Verfahren zur Herstellung eines Verbundblechs nach einem der Ansprüche 1 bis 6,
**dadurch gekennzeichnet, dass**
die mindestens eine Metallschicht (2, 4) und die mindestens eine Kunststoffschicht (6) bandförmig ausgebildet sind und die Herstellung durch bandförmiges Laminieren erfolgt.

8. Verfahren nach Anspruch 7,
**dadurch gekennzeichnet, dass**
das bandförmige Material der mindestens einen Metallschicht (2, 4) und der mindestens einen Kunststoffschicht (6) von jeweils einem Coil abgewickelt werden und gleichzeitig bandförmig laminiert werden.

9. Verfahren nach Anspruch 7 oder 8,
**dadurch gekennzeichnet, dass**
der mindestens eine elektrisch leitfähige Bereich (8) der Kunststoffschicht (6) von einem ersten bandförmigen Material bereitgestellt wird und der mindestens eine elektrisch isolierende Bereich (10) der mindestens einen Kunststoffschicht (6) von einem weiteren bandförmigen Material bereitgestellt wird.

10. Verwendung des Verbundblechs (1) nach einem der Ansprüche 1 bis 6 zum prozesssicheren Fügen mit einem weiteren Bauteil im Kraftfahrzeugbau.

## Claims

1. Composite sheet (1) comprising at least one metal layer (2, 4) and at least one plastic layer (6),
wherein the plastic layer (6) is connected to the at least one metal layer (2, 4) at least partially over an area, and the plastic layer (6) has at least two different regions,
- at least a first region (8) of the plastic layer (6) is electrically conductive, and
- at least a second region (10) of the plastic layer (6) is electrically insulating,
**characterised in that**
the thickness of the at least one plastic layer (6) is greater than the thickness of the at least one metal layer (2, 4), at least one further metal layer (4) is provided, which is connected to the at least one plastic layer (6) at least partially over an area, the plastic layer (6) is arranged between the metal layers (2, 4), and the at least two metal layers (2, 4) consist of different metals and/or metal alloys.

2. Composite sheet according to claim 1,
**characterised in that**
electrically conductive means (12), particularly in the form of particles, wires or wire meshes, are dispersed in the at least one electrically conductive region (8) of the plastic layer (6).

3. Composite sheet according to claim 1 or 2,
**characterised in that**
the density of the at least one electrically conductive region (8) of the plastic layer (6) is greater than the density of the at least one electrically insulating region (10) of the plastic layer (6).

4. Composite sheet according to any one of claims 1 to 3,
**characterised in that**
the at least one metal layer (2, 4) consists of steel, particularly carbon steel or stainless steel, aluminium and/or an aluminium alloy, particularly from the alloy group AA5xxx or AA6xxx, or magnesium and/or a magnesium alloy.

5. Composite sheet according to any one of claims 1 to 4,
**characterised in that**
the at least one metal layer (2, 4) has a thickness from 0.1 to 2 mm.

6. Composite sheet according to any one of claims 1 to 5,
**characterised in that**
the at least one metal layer (2, 4) is in the form of semi-finished product, particularly a sheet, strip, tailored blank or tailored strip.

7. Method for producing a composite sheet according to any one of claims 1 to 6,
**characterised in that**
the at least one metal layer (2, 4) and the at least one plastic layer (6) are in the form of strips, and production is carried out by lamination in strips.

8. Method according to claim 7,
**characterised in that**
the strip-shaped material of the at least one metal layer (2, 4) and of the at least one plastic layer (6) are each unwound from a coil and laminated in strips at the same time.

9. Method according to either of claims 7 or 8,
**characterized in that**
the at least one electrically conductive region (8) of the plastic layer (6) is provided from a first strip-shaped material and the at least one electrically insulating region (10) of at least one plastic layer (6) is provided from a further strip-shaped material.

10. Use of the composite sheet (1) according to any one of claims 1 to 6 for process-reliable joining with another component in motor vehicle construction.

## Revendications

1. Tôle composite (1) comprenant au moins une couche métallique (2, 4) et au moins une couche en matière plastique (6),
la couche en matière plastique (6) étant reliée au moins en partie en nappe avec l'au moins une couche métallique (2, 4) et la couche en matière plastique (6) comportant au moins deux zones différentes,
- au moins une première zone (8) de la couche en matière plastique (6) est conductrice d'électricité et
- au moins une deuxième zone (10) de la couche en matière plastique (6) est électriquement isolante,
**caractérisée en ce que**
l'épaisseur de l'au moins une couche en matière plastique (6) est supérieure à l'épaisseur de l'au moins une couche métallique (2, 4), au moins une couche métallique (4) supplémentaire est prévue, qui est reliée au moins partiellement en nappe avec la couche en matière plastique (6), la couche en matière plastique (6) est placée entre les couches métalliques (2, 4) et les au moins deux couches métalliques (2, 4) sont constituées de différents métaux et/ou alliages de métaux.

2. Tôle composite selon la revendication 1,
**caractérisée en ce que**
dans l'au moins une zone (8) conductrice d'électricité de la couche en matière plastique (6), on disperse des moyens (12) conducteurs d'électricité, en particulier sous la forme de particules, de fils métalliques ou de grilles métalliques.

3. Tôle composite selon la revendication 1 ou la revendication 2,
**caractérisée en ce que**
la densité de l'au moins une zone (8) conductrice d'électricité de la couche en matière plastique (6) est supérieure à la densité de l'au moins une zone (10) électriquement isolante de la couche en matière plastique (6).

4. Tôle composite selon l'une quelconque des revendications 1 à 3,
**caractérisée en ce que**
l'au moins une couche métallique (2, 4) est constituée d'acier, notamment d'acier au carbone ou d'acier fin, d'aluminium et/ou d'un alliage d'aluminium, notamment du groupe d'alliages AA5xxx ou AA6xxx, ou de magnésium et/ou d'un alliage de magnésium.

5. Tôle composite selon l'une quelconque des revendications 1 à 4,
**caractérisée en ce que**
l'au moins une couche métallique (2, 4) présente une épaisseur de 0,1 à 2 mm.

6. Tôle composite selon l'une quelconque des revendications 1 à 5,
**caractérisée en ce que**
l'au moins une couche métallique (2, 4) est conçue en tant que produit semi-fini, en particulier en tant que tôle, bande, tailored blank ou tailored strip.

7. Procédé destiné à fabriquer une tôle composite selon l'une quelconque des revendications 1 à 6,
**caractérisé en ce que**
l'au moins une couche métallique (2, 4) et l'au moins une couche en matière plastique (6) sont conçues en forme de bandes et la fabrication s'effectue par laminage en bande.

8. Procédé selon la revendication 7,
**caractérisé en ce qu'**
la matière en forme de bande de l'au moins une couche métallique (2, 4) et de l'au moins une couche en matière plastique (6) de chaque fois est dérouler sur une bobine et est lamine simultanément en forme de bande.

9. Procédé selon la revendication 7 ou la revendication 8,
**caractérisé en ce qu'**
on met à disposition l'au moins une zone (8) conductrice d'électricité de la couche en matière plastique (6) à partir d'une première matière en forme de bande et l'au moins une zone (10) électriquement isolante de la couche en matière plastique (6) à partir d'une autre matière en forme de bande.

10. Utilisation de la tôle composite (1) selon l'une
quelconque des revendications 1 à 6 pour l'assemblage par processus fiable avec un autre élément de construction dans la construction automobile.
